# EUROPEAN PATENT APPLICATION

(11) **EP 0 948 207 A1**
(43) Date of publication of application: **06.10.1999**
(21) Application number: 99200581.9
(22) Date of filing: 02.03.1999
(51) Int. Cl.: H04N 7/26

(54) **Method and apparatus for processing a digital signal**

(30) Priority: 03.04.1998 GB 9807203
(71) Applicant: NDS LIMITED, West Drayton, Middlesex UB7 ODQ (GB)
(72) Inventor: Murray, Kevin Alistair, Romsey, Hampshire SO51 0JR (GB); Davies, Colin, Fordingbridge, Hampshire SP6 2NS (GB); Bock, Alois Martin, Eastleigh, Hampshire SO53 4RH (GB); Huggett, Anthony Richard, Eastleigh, Hampshire SO50 5PZ (GB); Funnel, John Stuart, Southampton SO15 2TU (GB); Warburton, Richard John, Hedge End, Southampton SO30 2RP (GB); Stubbings, Clive Anthony, Eastleigh, Hampshire SO50 7NW (GB)
(74) Representative: Anderson, Angela Mary

(57) **Abstract**

The present invention relates to digital television, and in particular the encoding of high-definition television (HDTV).

Standard digital television pictures have a resolution of 480 x 704 pixels and display at 30 frames per second. High definition television (HDTV) differs from standard television in having a much higher resolution.

The generation of digitally compressed HDTV signals requires dedicated encoding equipment due to the high sampling rates used for HDTV signals. Consequently, due to their increased complexity, HDTV encoders are substantially more complex and expensive than standard TV encoders.

A standard television encoder is not capable of encoding a HDTV image due to the increased resolution and the much larger data rates associated with such large images which is outside of capacity of a standard television encoder.

The present invention overcomes these problems and provides a method and apparatus for creating HDTV signals using predominantly standard television equipment.

## Description

The present invention relates to digital television, and in particular the encoding of high-definition television (HDTV).

Standard digital television pictures have a resolution of 480 x 704 pixels and display at 30 frames per second. High definition television (HDTV) differs from standard television in having a much higher resolution. A number of differing HDTV standards have emerged each differing in image resolution and/or frame rate. The table below illustrates some of the more common HDTV resolutions, and for comparison standard digital television is also included.

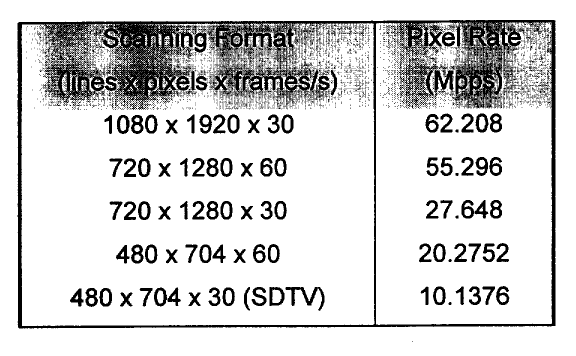

The generation of digitally compressed HDTV signals requires dedicated encoding equipment due to the high sampling rates used for HDTV signals. Consequently, due to their increased complexity, HDTV encoders are substantially more complex and expensive than standard TV encoders.

A standard television encoder is not capable of encoding a HDTV image due to the increased resolution and the much larger data rates associated with such large images which is outside of capacity of a standard television encoder.

A system is described in our co-pending United Kingdom patent application 9807206.9 in which standard encoding equipment can be used to encode a HDTV image.

Accordingly, it is desirable to produce a HDTV data stream by using predominantly standard encoding equipment.

The aim of the present invention is to convert a transport stream containing a plurality of individual video channels into a HDTV transport stream.

According to a first aspect of the present invention, there is provided apparatus for processing a plurality of separately encoded elements of an image to produce a single encoded image capable of being reconstructed to represent the image, the apparatus comprising:
a co-ordinator for selectively spatially and temporally arranging the elements; and
a combiner for combining the selectively arranged elements to form the single encoded image.

According to a second aspect of the present invention, there is provided a method for processing a plurality of separately encoded elements of an image to produce a single encoded image capable of being reconstructed to represent the image, the method comprising the steps of:
selectively co-ordinating the elements to spatially and temporally arrange them; and
combining the selectively arranged elements to form the single encoded image.

The invention will now be described by way of example, with reference to the accompanying drawings, in which:
Figure 1 is a diagram showing a high definition television image divided into a number of elements;
Figure 2 is a diagram showing an overview of a system according to the present invention;
Figure 3 is a diagram showing an overview of the post processor 206 included in the system of Figure 2;
Figure 4 is a diagram showing one embodiment of the resynchroniser and repositioner included in the system of Figure 3;
Figure 5 is a diagram illustrating a number of packet structures of a digital data-stream;
Figure 6 is a diagram showing one embodiment of the video store of Figure 4 in greater detail;
Figure 7 is a diagram showing one embodiment of the slice resynchroniser included in the system of Figure 4; and
Figure 8 is a diagram showing one embodiment of the stream recombiner included in the system of Figure 3.

The table below illustrates some of the common HDTV resolutions, and also indicates the number of standard television encoders needed to encode a complete HDTV image according its resolution.

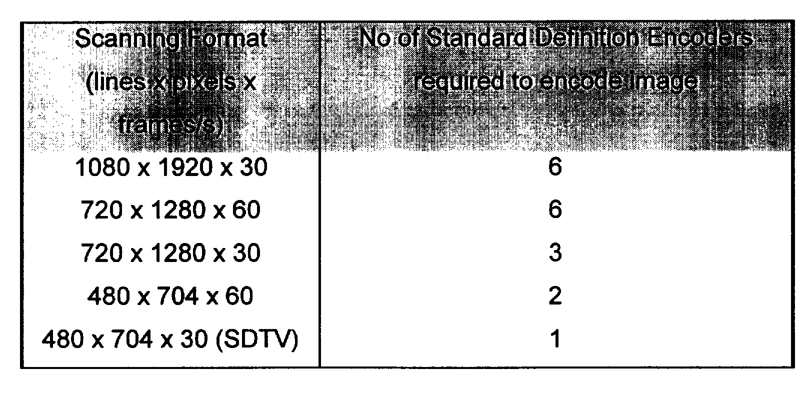

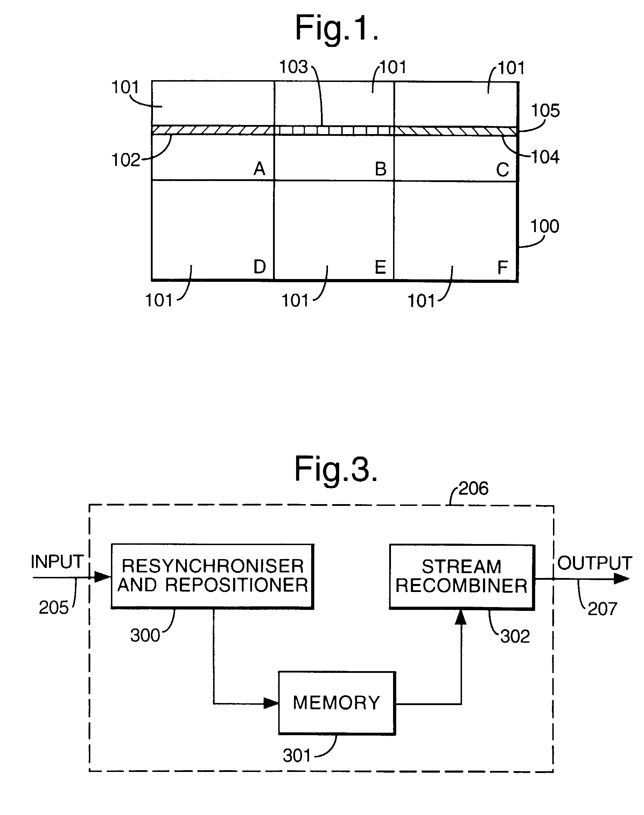

Figure 1 shows a representation of a high definition television (HDTV) image 100 divided up into a number of sub-elements 101, A to F.

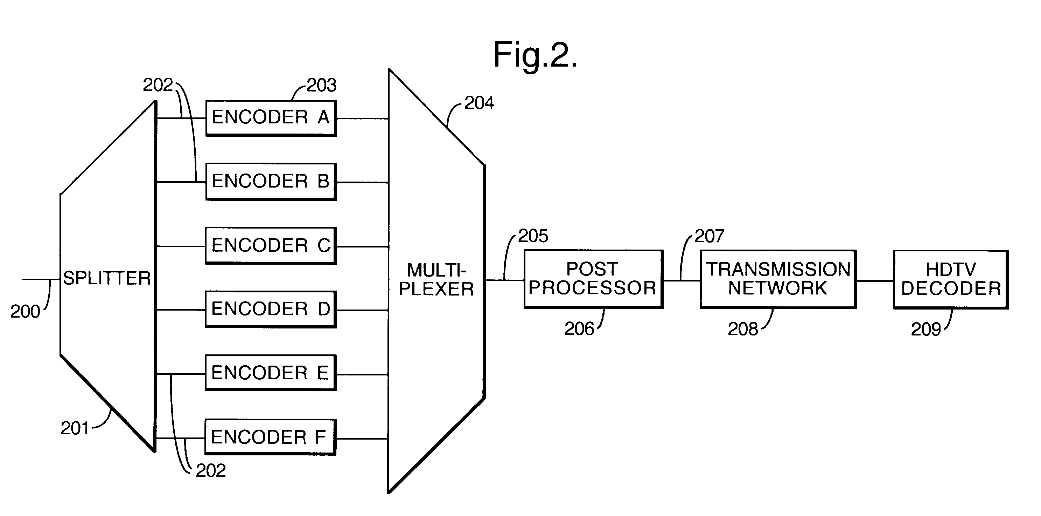

Referring now to Figure 2, there is shown a diagram illustrating an overview of the present invention. A HDTV signal 200 is input to a signal splitter 201. The HDTV signal 200 could be supplied by any HDTV source such as a storage device or other means. The signal splitter 201 divides the HDTV image 100 into elements 101 and creates a separate digital data stream 202 for each element. In this example, as shown in Figure 1, the HDTV image is divided up into six standard television pictures. In addition to splitting up the signal, the splitter 201 also inserts a series of time codes into the data stream. The time codes are used later in the post processor 206 to ensure that temporal synchronisation between each of the elements is maintained. The functions of the signal splitter are described in more detail in our co-pending patent application 9807205.1. Each data stream 202 is encoded by a separate standard television encoder 203 to produce a main profile at main level (MP@ML) digital bit-stream. Element A of Figure 1 is encoded by encoder A of Figure 2, element B of Figure 1 is encoded by encoder B of Figure 2 and so on.

The six individual standard television digital bit-streams are then fed to a standard multiplexer 204 which may include a statistical multiplexer (not shown). The multiplexer 204 multiplexes together the six individual bit-streams to form a single multiplexed bit-stream 205. The multiplexed bit-stream 205 is a standard multiplexed bit-stream, and each of the bit-streams are, at this stage, independent from one another. If a standard receiver were inserted at this point it would only be possible to decode any of the individual bit-streams which would be an element of the image 100.

In order to become HDTV compliant the multiplexed bit-stream must be processed to change it from a standard bit-stream containing 6 MP@ML streams to a single main profile at high level (MP@HL) HDTV compliant stream. This conversion process according to the present invention takes place in the post-processor 206. The converted data stream is then transmitted through a transmission network 208, which could be a satellite, terrestrial, microwave or other transmission network, to a high definition decoder 209. Here the data stream is decoded and a high definition television image may be displayed on a high definition television.

Figure 1 shows a line 105 of the HDTV image 100. The line is made up of a number of slices 102, 103 and 104. In the present invention each of the separately encoded elements employ a single slice, such as slice 102 in element A, to represent a line of each element, however other embodiments may use a number of slices.

Slices, which are preceded by a slice header, are combined to form frames, which are used in the encoding process. Frames are then arranged together, usually in groups of 12, to form a group of pictures or GOP. Each GOP starts with a GOP header which contains control data, including a time code (inserted by the signal splitter 201.

The post-processor 206 performs a number of functions in order to convert the six standard multiplexed television bit-streams into a single HDTV bit-stream which are described below.

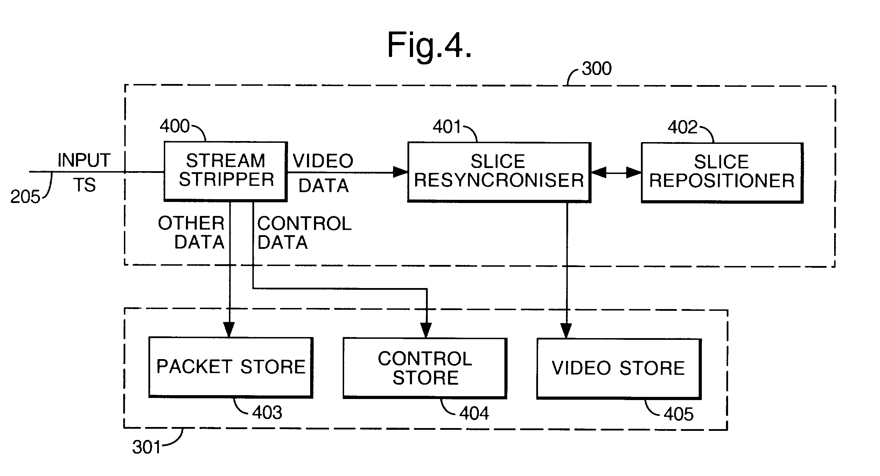

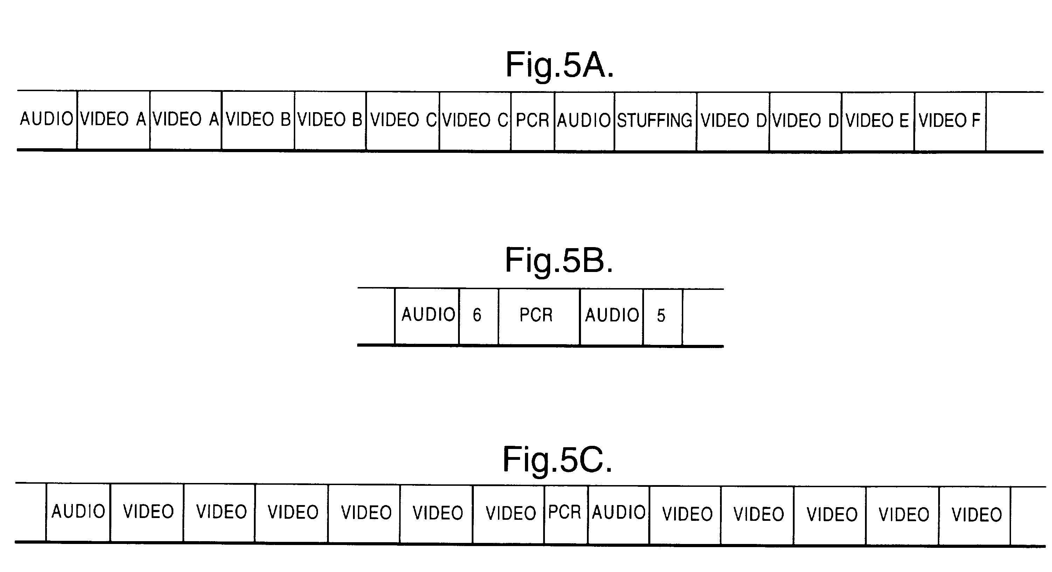

Figure 3 is a diagram showing an expansion of the post-processor 206 of Figure 2. A multiplexed transport stream 205 including a plurality of standard television bit-streams is input to a resynchroniser and repositioner 300 which processes the transport stream to prepare the input data for conversion to a HDTV data-stream. Packets from each of the individual video streams are distributed throughout the multiplexed transport stream as illustrated in Figure 5a. Since the data is transmitted in series, video data from one element may arrive some time before data from another element. Due to the way multiplexing is performed, data is not necessarily continuous from any one image, and this can lead to video packets for one element being several frames ahead or behind video packets from another element. The resynchroniser alleviates this problem by resynchronising the video data as it arrives, such that synchronisation across the whole image is maintained. This process is described in greater detail below.

Another problem that exists is that of spatial positioning. The input transport stream contains a plurality of independent video-streams, each representing an element of a complete HDTV image, as shown in Figure 1. In order to be displayed correctly by a HDTV decoder, each of the individual slices must be re-positioned such that each slice is displayed in the correct position to reconstruct the image. For the example shown in Figure 1, the HDTV line 105 must be correctly represented by slices 102, 103 and 104. Each of the slices must be correctly positioned and must also be temporally synchronised so that each slice is from the same point in time. Failure to achieve this would result in different elements of the image being out of time with each other, and the boundaries of each separately encoded element would be visible in the reconstructed image.

At this point, none of the individual slices have horizontal or vertical offsets, since ordinarily they would be displayed by a standard television decoder and do not therefore require any offsets. The repositioner must modify or add in offsets to each of the slices in each of the data-streams, such that a continuous and uniform image is displayed by a decoder. Referring back to Figure 1, it can be seen that slice 102 of element A requires no horizontal offset since element A is the normal display position. Slices 103 and 104, of elements B and C respectively both require horizontal offsets to be added to ensure that slice 103 is displayed adjacent to slice 102, and slice 104 is displayed adjacent to slice 103. It follows that repositioning must be performed such that each of the slices 102, 103 and 104 form a single continuous line of the original image 100.

Once the video data has been repositioned and resynchronised, it is stored in a memory 301. A stream recombiner 302 then extracts the processed data from the memory 301 and recombines it to form a HDTV compliant transport stream. The recombining process is described in greater detail below.

Referring now to Figure 4, there is shown an expansion of the resynchroniser and repositioner 300 of Figure 3.

A transport stream 205 including a plurality of video streams is input to a stream stripper 400. The stream stripper 400 separates the input transport stream into its component parts - video data, control data and other data. The control data is stored in a control store 404, and includes data relating to image size, image format, and temporal ordering. The 'other' data, which includes audio data and timing information, is stored in amended form in a packet store 403, and the video data is further processed by a slice resynchroniser 401 and slice repositioner 402 before being stored in a video store 405. The packet store 403, control store 404 and video store 405 are all part of the memory 301 shown in Figure 3.

Figure 5a shows an example transport stream comprising a number of video packets from each of the elements A to F, and a number of audio, clock reference and stuffing packets. The data is stored in the packet store 403 as shown in Figure 5b. Where data has been removed from the transport stream, an integer indicating the number of packets removed from the stream is stored, in place of the removed data. The transport stream is stripped in this way so that all time critical packets, such as audio and the clock references, are separated from the video data which requires extensive processing to convert it into a HDTV compliant data stream. This has the additional benefit of preserving the time critical ordering of the original data stream.

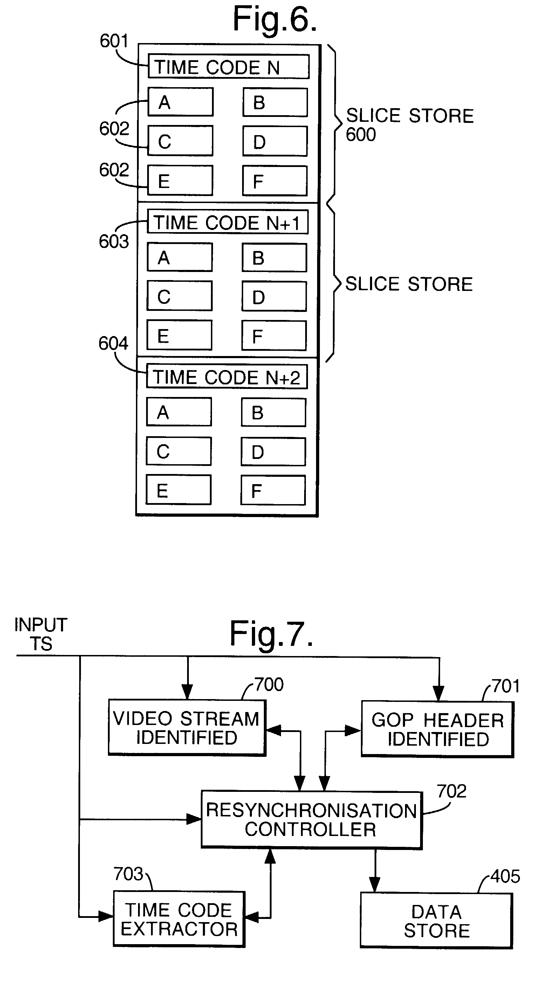

Figure 7 describes the slice resynchroniser 401 in greater detail. The input video data, comprising only video packets is input to a video stream identifier 700, a group of pictures (GOP) header identifier 701, a time code extractor 703 and a resynchronisation controller 702.

The video stream identifier identifies the video stream from which each video packet originates. The GOP header extractor analyses the video stream looking for a GOP header which contains the time code for that group of pictures. A time code extractor 703 removes the time code from the GOP header and this data is then processed by the resynchronisation controller 702 to resynchronise the video data and store it in the data store 405. Although the time code is only contained in the GOP header (and therefore only applies to the first frame in the GOP), an individual time code is derived for each of the subsequent frames in the GOP.

Figure 6 represents pictorially how the data store 405 is arranged. The data store is arranged into a number of slice stores 600. Each slice store is indexed to by a time code 601. The slice store 600 is sub-divided into a separate slice store for each of the elements A to F. Each element slice store 602 is used to store all the slices that make up a complete frame of an element 101.

In this example, where a HDTV image is split up into six elements, there are six element slice stores 602, allowing a complete image 100 to be stored. Each slice store therefore stores a complete image, made up of multiple slices from each of the individual video streams. The reason for this is that, due to the distributed nature of a transport stream, slices arrive in an unsynchronised manner, and some video streams may be several frames out of synchronisation. Storing all slices for a given frame, together with all the other slices from the other video streams for the same frame ensures that synchronisation can be restored when the HDTV data stream is finally created.

Each slice store is indexed by a time code identifier, such as those shown at 601, 603 and 604. When the first time code is extracted by time code extractor 703, each slice store 600 is prepared by initialising the time code identifiers such that each slice store 600 has an incremental time code identifier. As each slice arrives the time code is extracted and the slice is stored in the slice store 602 which matches the respective time code. Each slice is stored in the appropriate store depending on which element the slice originates from. As further video packets arrive, each of the slice stores fill up until they contain all slices for all elements for a given image. The video store 405 can store a number of complete images.

This process results in all the slices from all the elements relating to an image being stored together, and it alleviates the problems caused by the distribution of video packets in the multiplexed data stream. This stored data is eventually removed by the stream recombiner 302 of Figure 3. As data is removed from the slice store, the time code index 601 is updated with the next available time code, to allow future slices to be stored. The process of filling up and removing data from the slice stores is a cyclic process.

The slice data may also require additional processing to correctly spatial reposition them within the complete HDTV image. The slice repositioner is able to derive the required position of the slice within the complete HDTV image, by identifying which element the slice belongs to. Referring back to Figure 1, it can be seen that slice 102 of element A requires no horizontal offset since element A is in the normal display position - i.e. at the top left hand edge. Slices 103 and 104, of elements B and C respectively both require horizontal offsets to be added to ensure that slice 103 is displayed adjacent to slice 102, and slice 104 is displayed adjacent to slice 103. It follows that repositioning must be performed such that each of the slices 102, 103 and 104 form a single continuous line of the original image 100. The slices from the elements which form the bottom half of the image 100, D, E and F, will all require vertical offsets to be added, as well as horizontal offsets being needed for elements E and F.

The offset modification for each slice is performed by modifying the slice header. Horizontal offsets are added to the slice header by inserting additional bits to create the required horizontal offset. Vertical offsets involve a modification of the existing offset.

The repositioning can either be performed before the data is stored in the slice store, or can post-process the resynchronised data already stored in the slice store.

Once the video data has been stored in a resynchronised order and has had any spatial positioning offsets modified, the data is ready to be recombined into a HDTV compliant data stream.

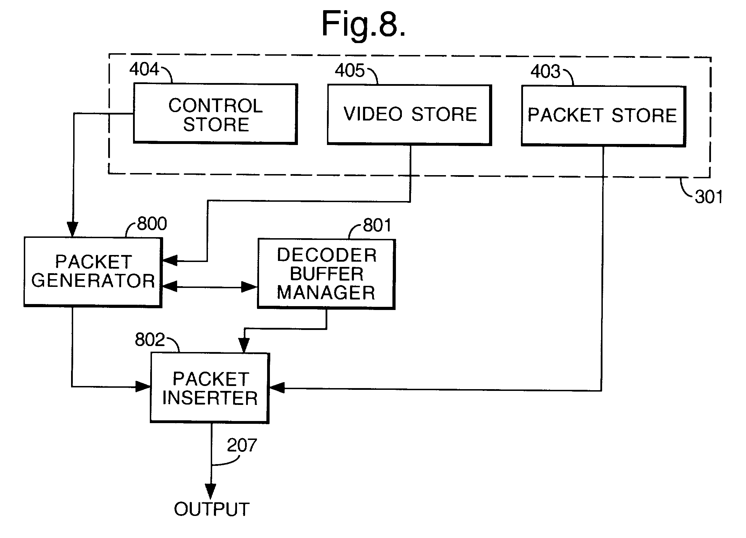

Figure 8 is a diagram of a system to recombine the data stored in memory 301 to form a HDTV data-stream.

Referring now to Figure 8, there is shown a packet generator 800 which removes control data from the control store 404 and video data from the video store 405 to generate HDTV packets. Some of the control data, which includes data relating to image size, image format, and temporal ordering, may require modification, especially the image size data which needs to be updated to reflect the size of the image. The control store also contains control data from each of the individual data stream. Much of this data is duplicated in each data-stream, and therefore only a fraction of the stored control data ends up in the HDTV data-stream.

The video data in the data store 405 is arranged as described above. The packet generator is therefore able to extract the video data in a synchronised way and to create packets which ensure synchronisation is retained, unlike the way normal multiplexed data-streams are constructed in a distributed manner. A decoder buffer manager 801 models the buffer of a decoder and adds padding data to the video data, as required, to ensure that the decoder buffer never underflows or overflows.

A packet inserter 802 takes the generated packets and slots them in to the stripped stream which was previously stored in the packet store 403 by the stream stripper 400 described above. The stripped data-stream stored in packet store 403 indicates how many packets were removed from the stream during the stripping process. This enables the packet inserter to reinsert the same number of packets into various parts of the stripped bit-stream as were initially removed. The advantage of inserting the same number of packets which were removed is that the position of the more critical packets, such as the audio or time codes, remains unchanged within the bit-stream. This ensures that lip synchronisation (synchronisation of sound and images) is preserved. An alternative solution would be to remove all data from the data stream and to reconstruct a completely new data-stream from scratch but this would involve a far greater degree of complexity and much more processing power to ensure that the relationships of all time critical packet are preserved.

Both the slice repositioning and stream recombiner generate additional data which must be included in the HDTV data stream. A convenient way of achieving this involves adapting the multiplexer 204 to insert additional stuffing packets into the initial multiplexed transport stream. Since stuffing packets are removed and discarded by the stream stripper 400, this leaves additional space in the stripped stream in which the extra data can be inserted. This further simplifies the present invention, since the position of time critical packets, such as audio and time codes, does not have to be dealt with by the present invention, and instead is dealt with by the multiplexer. This removes any duplication of functionality. The amount of extra stuffing packets to be inserted by the multiplexer can be calculated in advance to ensure that sufficient space is provided.

The effect of the re-insertion process is shown more clearly in Figure 5c. The initial transport stream containing 6 MP@ML video-streams has now been processed and recombined to form a single MP@HL transport stream. The position within the data stream of the audio, and time codes are as they were in the initial multiplexed data stream of Figure 5a. Figure 5c, instead of having video packets from each of the individual elements, now only contains high definition television video packets and represents a HDTV compliant data stream.

It should be noted that the present invention carries out the above processes in real-time, introducing only a minimal delay despite the complex processing performed.

One major advantage with the present invention is the flexibility it affords broadcasters. By utilising predominantly standard equipment, a broadcaster has the choice of either using a number of standard encoders to produce standard television bit-streams, or using the present invention to produce HDTV bit-streams. This allows the broadcaster the flexibility of being able to produce both standard and high-definition television streams, but without needing dedicated and costly high-definition television encoders. Using the same set-up, but with a lower resolution HDTV it is also possible to encode both HDTV and a number of SDTV channels using the same equipment. It also allows the broadcaster to alter the usage of the system by broadcasting, for example, films in HDTV and later switching to broadcast several SDTV channels for the broadcast of news or current affairs programs.

## Claims

1. Apparatus for processing a plurality of separately encoded elements of an image to produce a single encoded image capable of being reconstructed to represent the image, the apparatus comprising:
a co-ordinator for selectively spatially and temporally arranging the elements; and
a combiner for combining the selectively arranged elements to form the single encoded image.

2. The apparatus of claim 1, wherein the co-ordinator further includes a separator for separating the elements into components including video and control data.

3. The apparatus of claims 1 or 2, wherein the co-ordinator arranges the elements such that temporally associated video data from each of the elements is arranged together ready for combining.

4. The apparatus of claims 1, 2 or 3, wherein the co-ordinator further includes a repositioner to spatial arrange the elements by selectively modifying offset data in the video data.

5. The apparatus of claims 1, 2, 3 or 4, wherein the combiner combines the temporally and spatially arranged video data with the previously separated components preserving any temporal relationships to produce the single encoded image.

6. The apparatus of any of claims 1 to 5, further comprising inserting redundant data into at least one of the separately encoded elements to provide space for use by the combiner.

7. A method of processing a plurality of separately encoded elements of an image to produce a single encoded image capable of being reconstructed to represent the image, the method comprising the steps of:
selectively co-ordinating the elements to spatially and temporally arrange them; and
combining the selectively arranged elements to form the single encoded image.

8. The method of claim 7, wherein the step of co-ordinating further includes the step of separating the elements into components including video and control data.

9. The method of claim 7 or 8, further comprising arranging the elements such that temporally associated video data from each of the elements is arranged together ready for combining.

10. The method of claim 7, 8 or 9, wherein the step of co-ordinating further includes the step of repositioning the elements by selectively modifying offset data in the video data.

11. The method of claims 7, 8, 9 or 10, wherein the step of combining combines the temporally and spatially arranged video data with the previously separated components preserving any temporal relationships to produce the single encoded image.

12. The method of any of claims 7 to 11, further comprising inserting redundant data into at least one of the separately encoded elements to provide space for use in the step of combining.

13. Apparatus for transmitting a signal processed according to any of the claims 1 to 6.

14. A method of transmitting a signal processed according to any of the claims 7 to 12.
